# EUROPÄISCHE PATENTSCHRIFT

(11) **EP 2 738 447 B1**
(45) Veröffentlichungstag und Bekanntmachung des Hinweises auf die Patenterteilung: **20.07.2016**
(21) Anmeldenummer: 13195080.0
(22) Anmeldetag: 29.11.2013
(51) Int. Cl.: F21S 4/00, A47F 11/10, G09F 3/20, A47F 5/08, G09F 13/18, F21W 131/301, F21Y 115/10, F21Y 103/00, F21V 8/00

(54) **Regalbeleuchtungsvorrichtung**
Shelf lighting device
Dispositif d'éclairage d'étagère

(30) Priorität: 30.11.2012 DE 102012111677
(43) Veröffentlichungstag der Anmeldung: 04.06.2014
(73) Patentinhaber: Weyer, Andreas, 96199 Zapfendorf (DE)
(72) Erfinder: Weyer, Andreas, 96199 Zapfendorf (DE)
(74) Vertreter: Manske, Jörg

(56) Entgegenhaltungen:
- EP-A1- 2 106 726
- WO-A1-2011/114026
- DE-A1- 3 612 296
- US-A1- 2012 230 018

## Beschreibung

Die vorliegende Erfindung betrifft eine Regalbeleuchtungsvorrichtung zur Beleuchtung eines Regalfachs eines Regals, umfassend Mittel zur Anbringung der Regalbeleuchtungsvorrichtung an einem Teil, insbesondere an einem Regalboden, des Regals, einen Leuchtmittelträger, ein Leuchtmittel mit einer Anzahl von Lichtquellen, das derart an dem Leuchtmittelträger angebracht ist, dass es während des Betriebs zumindest eines der Regalfächer des Regals beleuchten kann, sowie einen zumindest teilweise transparenten Etikettenhalter, der zur Aufnahme mindestens eines Etiketts, mindestens einer Regalbeschriftung oder dergleichen geeignet ist, wobei die Regalbeleuchtungsvorrichtung mindestens einen Lichtleitkörper aufweist, der sich zumindest abschnittsweise zwischen dem Leuchtmittelträger und dem Etikettenhalter erstreckt und so ausgebildet und angeordnet ist, dass ein Teil des von jeder der Lichtquellen des Leuchtmittels während des Betriebs emittierten Lichts in den Lichtleitkörper eingekoppelt werden kann und sich in diesem derart ausbreiten kann, dass es den Etikettenhalter zumindest abschnittsweise hinterleuchten kann, und der übrige Teil des von jeder der Lichtquellen des Leuchtmittels emittierten Lichts das Regalfach beleuchten kann.

Regalbeleuchtungsvorrichtungen sind aus dem Stand der Technik in unterschiedlichen Ausführungsformen bereits bekannt. Um einen Etikettenhalter mit einem von diesem aufgenommenen Etikett oder dergleichen hinterleuchten und ein Regalfach eines Regals beleuchten zu können, werden bislang bei zahlreichen Regalbeleuchtungsvorrichtungen zwei separate Leuchtmittel eingesetzt. Durch das Vorsehen zweier separater Leuchtmittel ist der Aufbau der aus dem Stand der Technik bekannten Regalbeleuchtungsvorrichtungen aufwändig und dementsprechend teuer. Ferner wird häufig keine gleichmäßige Hinterleuchtung des von dem Etikettenhalter aufgenommenen Etiketts erreicht. Ferner sind Etikettenhalter bekannt, welche in Kombination mit Kaltkathodenleuchtstofflampen oder T5-Leuchtstoffröhren, die einen Abstrahlwinkel von 360° aufweisen, sowohl das Etikett als auch das Regal beleuchten können.

Die EP 2 106 726 A1 zeigt eine Regalanordnung, die eine Regalbeleuchtungsvorrichtung aufweist. Diese weist als Lichtquellen mehrere Leuchtdioden auf, die jeweils in einer Querausnehmung innerhalb des Regalbodens untergebracht sind. Eine vordere Leuchtdiode leuchtet in einen Schlitzraum, in den eine transparente Preisschiene eingesetzt ist. Diese transparente Preisschiene leitet das von dieser Leuchtdiode emittierte Licht und schafft dadurch eine Hintergrundbeleuchtung. Diese Leuchtdiode ist ausschließlich für die Erzeugung der Hintergrundbeleuchtung vorgesehen und trägt nicht zur Beleuchtung eines Regalfachs bei. Die übrigen Leuchtdioden dienen der Beleuchtung eines Regalfachs. Die einzelnen Leuchtdioden müssen bei der Herstellung aufwändig in den Querausnehmungen montiert werden.

Die US 2012/0230018 A1 beschreibt eine Regalbeleuchtungsvorrichtung der eingangs genannten Art, bei der herkömmliche LED-Leuchtstreifen verwendet werden, die an den Regalböden mit Hilfe von Klebestreifen, Befestigungsklammern oder dergleichen angebracht werden können. Die Leuchtdioden können einen Regalboden beleuchten und mit einem Teil des Lichts eine in einem vorderen Bereich des Regals befestigte Leiste aus extrudiertem Kunststoff, an deren Vorderseite Preisschilder befestigt sind, hinterleuchten.

Der vorliegenden Erfindung liegt die Aufgabe zu Grunde, eine Regalbeleuchtungsvorrichtung der eingangs genannten Art zur Verfügung zu stellen, die einfach aufgebaut ist und eine effiziente Beleuchtung des Regalfachs und des Etikettenhalters ermöglicht.

Die Lösung dieser Aufgabe liefert eine Regalbeleuchtungsvorrichtung der eingangs genannten Art mit den Merkmalen des kennzeichnenden Teils des Anspruchs 1. Die Unteransprüche betreffen vorteilhafte Weiterbildungen der Erfindung.

Bei einer erfindungsgemäßen Regalbeleuchtungsvorrichtung ist - wie aus dem Stand der Technik bekannt - vorgesehen, dass die Regalbeleuchtungsvorrichtung mindestens einen Lichtleitkörper aufweist, der sich zumindest abschnittsweise zwischen dem Leuchtmittelträger und dem Etikettenhalter erstreckt und so ausgebildet und angeordnet ist, dass ein Teil des von jeder der Lichtquellen des Leuchtmittels während des Betriebs emittierten Lichts in den Lichtleitkörper eingekoppelt werden kann und sich in diesem derart ausbreiten kann, dass es den Etikettenhalter zumindest abschnittsweise hinterleuchten kann, und der übrige Teil des von jeder der Lichtquellen des Leuchtmittels emittierten Lichts das Regalfach beleuchten kann. Dadurch wird erreicht, dass lediglich ein Leuchtmittel erforderlich ist, um sowohl das Regalfach beleuchten, als auch den Etikettenhalter und ein von diesem aufgenommenes Etikett oder eine von diesem aufgenommene Regalbeschriftung oder dergleichen hinterleuchten zu können. Dadurch kann der Aufbau der Regalbeleuchtungsvorrichtung vereinfacht werden. Der in den Lichtleitkörper eingekoppelte Anteil des von dem Leuchtmittel emittierten Lichts kann sich in diesem ausbreiten und den Etikettenhalter mit dem von diesem aufgenommenen Etikett beziehungsweise mit der davon aufgenommenen Regalbeschriftung effizient hinterleuchten. Der Leuchtmittelträger, an dem das Leuchtmittel angebracht ist, ist vorzugsweise abschnittsweise eben ausgeführt und aus einem wärmeleitenden, insbesondere metallischen Werkstoff (zum Beispiel aus Aluminium) hergestellt. Dadurch wird erreicht, dass während des Betriebs der Regalbeleuchtungsvorrichtung zumindest ein Teil der von dem Leuchtmittel erzeugten Wärme abgeführt werden kann. Ferner verleiht der metallische Werkstoff der Regalbeleuchtungsvorrichtung eine höhere Festigkeit und Stabilität, wodurch es zum Beispiel möglich ist, Regalbeleuchtungsvorrichtungen von bis zu 3,5 Metern Länge herzustellen. Der aus einem metallischen Werkstoff hergestellte Leuchtmittelträger ist in vorteilhafter Weise auch dazu in der Lage, ein Zugentlastungsmittel für ein elektrisches Anschlusskabel aufzunehmen.

Erfindungsgemäß ist vorgesehen, dass der Lichtleitkörper einen unteren Abschnitt aufweist, der abschnittsweise gekrümmt ausgeführt und so angeordnet ist, dass sich ein freies Ende des unteren Abschnitts teilweise über die Lichtaustrittsflächen der Lichtquellen hinweg erstreckt. Vorzugsweise ist das freie Ende des unteren Abschnitts des Lichtleitkörpers so angeordnet, dass etwa 20% des von den Lichtquellen des Leuchtmittels emittierten Lichts in den Lichtleitkörper eingekoppelt wird. Die übrigen etwa 80% des von den Lichtquellen emittierten Lichts können zumindest teilweise für die Beleuchtung des Regalfachs des Regals und der dort angeordneten Gegenstände genutzt werden.

In einer bevorzugten Ausführungsform wird vorgeschlagen, dass der Etikettenhalter einen ersten Flächenabschnitt und einen zweiten Flächenabschnitt aufweist, die planparallel sind, wobei zwischen den Flächenabschnitten ein Aufnahmebereich ausgebildet ist, der zur Aufnahme mindestens eines Etiketts oder einer Regalbeschriftung geeignet ist.

In einer besonders vorteilhaften Ausführungsform wird vorgeschlagen, dass die beiden Flächenabschnitte einstückig über einen abschnittsweise gebogen ausführten Federabschnitt miteinander verbunden sind. Der Federabschnitt ermöglicht vorteilhaft einen verrutschsicheren Halt des Etiketts beziehungsweise der Regalbeschriftung in dem Aufnahmebereich zwischen den beiden planparallelen Flächenabschnitten.

Vorzugsweise kann der Etikettenhalter aus einem transparenten Kunststoff, insbesondere aus Polyvinylchlorid (PVC), Polycarbonat (PC) oder aus Polymethylmethacrylat (PMMA) hergestellt sein. Dadurch wird eine einfache und kostengünstige Herstellung des Etikettenhalters ermöglicht.

In einer vorteilhaften Ausführungsform wird vorgeschlagen, dass die Mittel zur Anbringung der Regalbeleuchtungsvorrichtung an einem Teil des Regals einen ebenen Halteabschnitt umfassen, der so ausgebildet ist, dass er insbesondere an einer Oberseite oder Unterseite eines Regalbodens zur Anlage gebracht werden kann und an diesem, insbesondere mit einem Klebemittel, befestigbar ist. Das Klebemittel kann zum Beispiel ein doppelseitig klebendes Klebeband sein, das auf einfache Weise an dem Halteabschnitt und an der Oberseite e des Regalbodens angebracht werden kann. Dies ermöglicht eine einfache und intuitiv handhabbare Befestigung der Regalbeleuchtungsvorrichtung an einem Regalboden. Um die Anzahl der herzustellenden Komponenten der Regalbeleuchtungsvorrichtung möglichst gering zu halten, kann der ebene Halteabschnitt vorzugsweise integral mit dem Etikettenhalter ausgebildet sein. Prinzipiell besteht auch die Möglichkeit, den Halteabschnitt an der Unterseite eines Regalbodens anzubringen, wobei dann auf die Verbindungsstelle höhere Kräfte einwirken, die eine stärkere Befestigung erforderlich machen. Eine Anbringung an der Oberseite ist somit vorteilhafter für einfachen und sicheren Halt der Regalbeleuchtungsvorrichtung an dem Regalboden. Eine Befestigung an der Unterseite eines Regalbodens erleichtert die Befüllung des Regelbodens, da keine störende Kante des Halteabschnitts an der Oberseite des Regalbodens vorliegt.

In einer alternativen Ausführungsform besteht auch die Möglichkeit, dass die Mittel zur Anbringung der Regalbeleuchtungsvorrichtung an einem Teil des Regals eine Befestigungsklammer umfassen, die so ausgebildet ist, dass sie an dem Regalboden, insbesondere an einer vorderen Stirnseite des Regalbodens, anbringbar ist. Vorzugsweise kann die Befestigungsklammer so ausgebildet sein, dass sie in eine damit korrespondierende Aufnahmeöffnung in der vorderen Stirnseite des Regalbodens eingesetzt und kraft- oder formschlüssig in dieser festgelegt werden kann. Vorzugsweise ist die Befestigungsklammer aus Polycarbonat (PC) hergestellt. Die Befestigungsklammer kann insbesondere einen ersten Profilabschnitt und einen zweiten Profilabschnitt aufweisen, die sich in Querrichtung der Regalbeleuchtungsvorrichtung parallel zu einem ebenen Abschnitt des Leuchtmittelträgers erstrecken. Der erste Profilabschnitt kann an seinem freien Ende eine Verdickung aufweisen, die bei der Montage von unten in einen oberen, zumindest abschnittsweise gekrümmten Abschnitt des Leuchtmittelträgers eingreifen kann. Die Leuchtmittelhalterung kann ferner einen sich zumindest abschnittsweise in Querrichtung erstreckenden Halteabschnitt aufweisen, der so geformt ist, dass er das freie Ende des zweiten Profilschenkels abschnittsweise übergreifen kann.

In einer besonders vorteilhaften Ausführungsform ist vorgesehen, dass der Lichtleitkörper aus transparentem Polymethylmethacrylat hergestellt ist. Der Lichtleitkörper kann dadurch einfach und kostengünstig hergestellt werden. Überdies zeichnet sich Polymethylmethacrylat (PMMA) durch sehr gute Lichtleiteigenschaften aus.

Um die Beleuchtung des Etikettenhalters weiter zu verbessern und insbesondere homogener zu gestalten, sieht eine besonders vorteilhafte Ausführungsform vor, dass eine dem Leuchtmittelträger zugewandte Oberfläche des Lichtleitkörpers eine Oberflächenbehandlung, insbesondere eine weiße Farbschicht, eine Reflexionsschicht, ein (insbesondere durch Siebdruck oder Tampondruck) aufgedrucktes geometrisches Muster (zum Beispiel einen Punktrasterverlauf), eine Laser-Gravur oder eine V-Schnitt-Gravur, aufweist. Das durch Aufdrucken erhältliche geometrische Muster kann mit oder auch ohne Verlauf vorliegen.

In einer vorteilhaften Ausführungsform wird vorgeschlagen, dass ein unterer Abschnitt des Leuchtmittelträgers und ein unterer Abschnitt des Etikettenhalters gekrümmt ausgebildet sind, wobei die Krümmungen der unteren Abschnitte des Leuchtmittelträgers, des Etikettenhalters und des Lichtleitkörpers so gewählt sind, dass bei der Montage der untere Abschnitt des Leuchtmittelträgers innen am unteren Abschnitt des Lichtleitkörpers zur Anlage gebracht werden kann und der untere Abschnitt des Lichtleitkörpers innen am unteren Abschnitt des Etikettenhalters zur Anlage gebracht werden kann. Um einen sicheren Halt des Leuchtmittelträgers und des Lichtleitkörpers an dem Etikettenhalter zu bewirken, weist der Etikettenhalter vorzugsweise eine Halteleiste auf, die sich in Querrichtung parallel zum ersten Flächenabschnitt erstreckt, so dass der Leuchtmittelträger und der Lichtleitkörper von der Seite eingeschoben werden können und zwischen der Halteleiste und dem ersten Flächenabschnitt festgelegt werden können, wobei die Halteleiste einen oberen Rand des Leuchtmittelträgers (vorzugsweise spielfrei) übergreift.

In einer besonders vorteilhaften Ausführungsform wird vorgeschlagen dass die Lichtquellen Leuchtdioden sind, die vorzugsweise mit Abstand zueinander auf einem Trägerstreifen angeordnet sind. Leuchtdioden zeichnen sich insbesondere durch eine hohe Effizienz, einen geringen Stromverbrauch sowie durch eine lange Lebensdauer aus. Die Leuchtdioden können zum Beispiel so ausgebildet sein, dass sie Licht in einem Abstrahlwinkel in vertikaler Richtung von etwa 120° emittieren können.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Explosionsansicht einer Regalbeleuchtungsvorrichtung, die gemäß einem ersten Ausführungsbeispiel der vorliegenden Erfindung ausgeführt ist,
- Fig. 2: eine Seitenansicht der Regalbeleuchtungsvorrichtung gemäß Fig. 1,
- Fig. 3: eine perspektivische Ansicht der Regalbeleuchtungsvorrichtung,
- Fig. 4: eine weitere perspektivische Ansicht der Regalbeleuchtungsvorrichtung,
- Fig. 5: eine Seitenansicht einer Regalbeleuchtungsvorrichtung, die gemäß einem zweiten Ausführungsbeispiel der vorliegenden Erfindung ausgeführt ist.

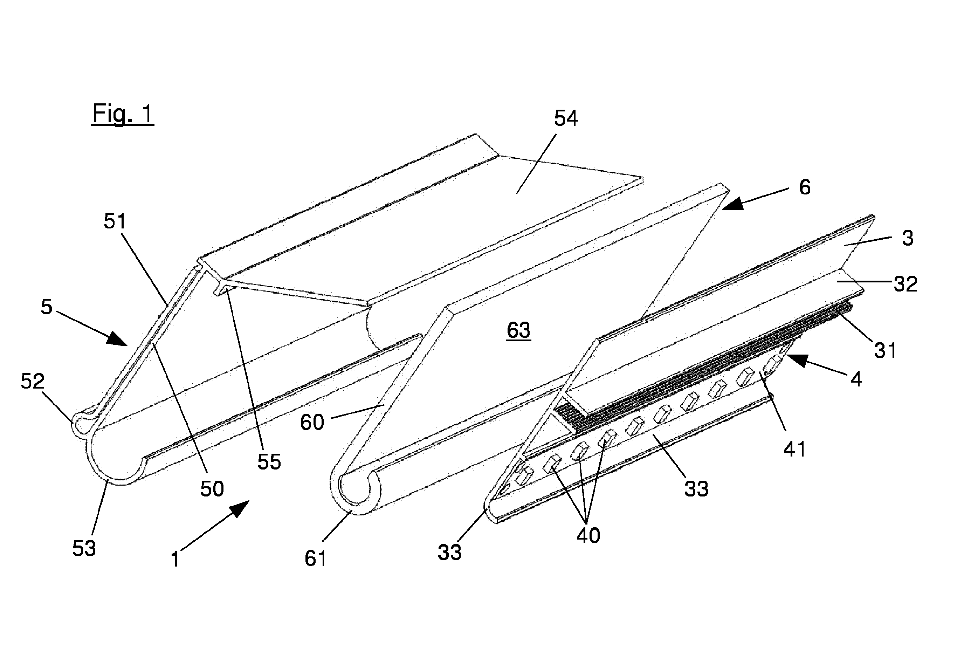

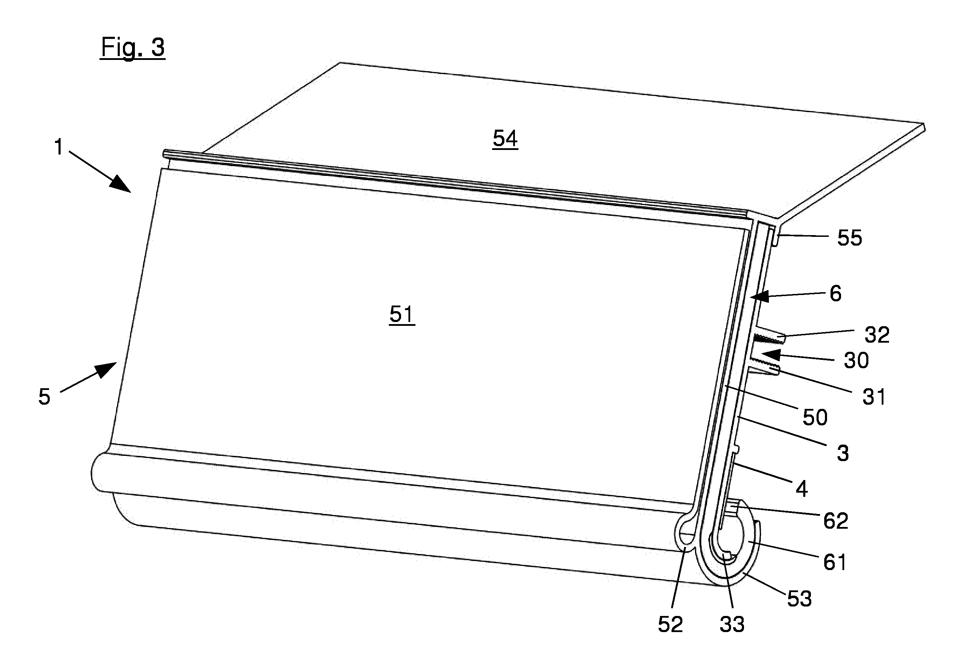

Unter Bezugnahme auf Fig. 1 bis 4 soll nachfolgend ein erstes Ausführungsbeispiel einer Regalbeleuchtungsvorrichtung 1 näher erläutert werden. Die Regalbeleuchtungsvorrichtung 1 umfasst einen Leuchtmittelträger 3 und ein verhältnismäßig schmales, streifenförmiges Leuchtmittel 4 mit einer Mehrzahl auf einem Trägerstreifen 41 angeordneter Leuchtdioden 40, das an dem Leuchtmittelträger 3 angebracht ist, und einen Etikettenhalter 5, der zur Aufnahme mindestens eines Etiketts, einer Regalbeschriftung oder dergleichen geeignet ist, sowie einen Lichtleitkörper 6, der sich abschnittsweise zwischen dem Leuchtmittelträger 3 und dem Etikettenhalter 5 erstreckt.

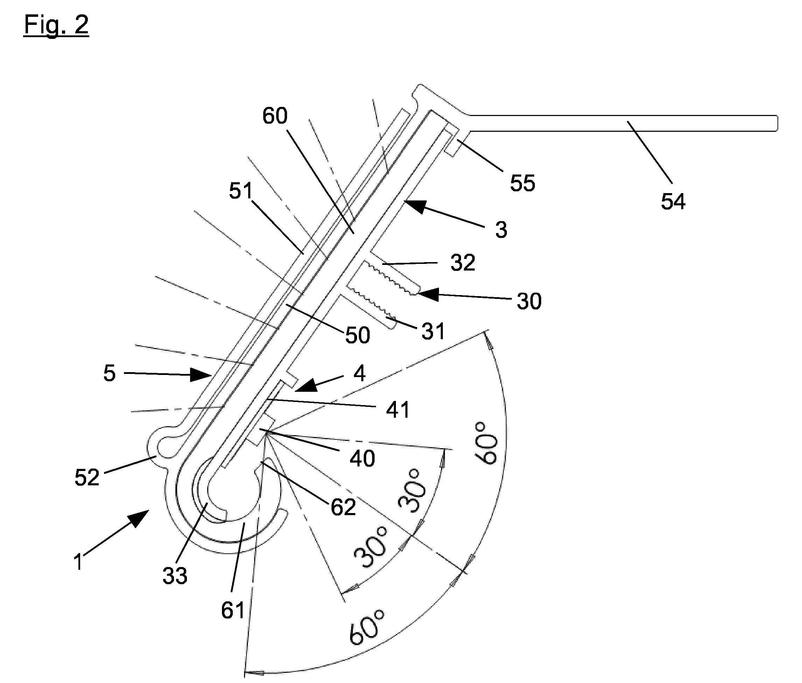

Wie insbesondere in Fig. 2 zu erkennen, sind die Leuchtdioden 40 des streifenförmigen Leuchtmittels 4 in Querrichtung der Regalbeleuchtungsvorrichtung 1 mit Abstand zueinander (vorzugsweise äquidistant) nebeneinander angeordnet. Der Leuchtmittelträger 3, an dem das Leuchtmittel 4 angebracht ist, ist abschnittsweise eben ausgeführt und vorzugsweise aus einem wärmeleitenden, insbesondere metallischen Werkstoff (zum Beispiel aus Aluminium) hergestellt. Dadurch wird erreicht, dass während des Betriebs der Regalbeleuchtungsvorrichtung 1 zumindest ein Teil der von den Leuchtdioden 40 des Leuchtmittels 4 erzeugten Wärme abgeführt werden kann. Ferner verleiht der metallische Werkstoff der Regalbeleuchtungsvorrichtung 1 eine höhere Festigkeit, wodurch es zum Beispiel möglich ist, Regalbeleuchtungsvorrichtungen 1 von bis zu 3,5 Metern Länge herzustellen. Der aus einem metallischen Werkstoff hergestellte Leuchtmittelträger 3 ist - wie weiter unten noch erläutert werden wird - in vorteilhafter Weise auch dazu in der Lage, ein Zugentlastungsmittel 7 für ein elektrisches Anschlusskabel 8 aufzunehmen.

Der Leuchtmittelträger 3 weist ferner einen Profilkanalabschnitt 30 mit zwei Profilschenkeln 31, 32 auf, die sich parallel zueinander in Querrichtung erstrecken. Das streifenförmige Leuchtmittel 4 ist in einem unteren Bereich des ebenen Abschnitts des Leuchtmittelträgers 3 angeordnet. An diesen Bereich schließt sich ein unterer Abschnitt 33 des Leuchtmittelträgers 3 an, der vorliegend leicht (in Richtung des Leuchtmittels 4) gekrümmt ausgebildet ist.

Der Etikettenhalter 5 ist in diesem Ausführungsbeispiel einstückig aus einem transparenten Kunststoff, insbesondere aus Polyvinylchlorid (PVC), Polycarbonat (PC) oder aus Polymethylmethacrylat (PMMA), hergestellt und weist einen ersten Flächenabschnitt 50 und einen zweiten Flächenabschnitt 51 auf. Die beiden Flächenabschnitte 50, 51 sind planparallel und über einen gebogen ausführten Federabschnitt 52 miteinander verbunden. Zwischen den beiden planparallelen Flächenabschnitten 50, 51 ist ein Aufnahmebereich (nicht mit Bezugszeichen versehen) ausgebildet, in dem mindestens ein Etikett, insbesondere ein Waren- und/oder Preisetikett, eine Regalbeschriftung oder dergleichen angeordnet werden kann. Der Federabschnitt 52 ermöglicht einen verrutschsicheren Halt des Etiketts beziehungsweise der Regalbeschriftung in dem Aufnahmebereich zwischen den beiden planparallelen Flächenabschnitten 50, 51. Ein unterer Abschnitt 53 des Etikettenhalters 5 ist vorliegend rinnenartig gekrümmt ausgebildet.

In einem oberen Bereich weist der Etikettenhalter 5 in diesem Ausführungsbeispiel einen ebenen Halteabschnitt 54 auf, der so ausgebildet ist, dass er insbesondere an einer Oberseite eines in Fig. 1 bis 4 nicht explizit dargestellten Regalbodens zur Anlage gebracht und daran befestigt werden kann. Vorzugsweise kann der Halteabschnitt 54 mit dem Regalboden - insbesondere unter Verwendung eines doppelseitig klebenden Klebebands - verklebt werden, um dadurch einen sicheren Halt der Regalbeleuchtungsvorrichtung 1 an dem Regalboden zu erreichen. In dem hier gezeigten Ausführungsbeispiel schließt der ebene Halteabschnitt 54 mit dem ersten Flächenabschnitt 50 des Etikettenhalters 5 einen Winkel von etwa 125° ein. Es soll an dieser Stelle angemerkt werden, dass der Halteabschnitt 54 und der erste Flächenabschnitt 50 des Etikettenhalters 5 auch einen Winkel miteinander einschließen können, der kleiner oder auch größer als 125° ist. Prinzipiell besteht auch die Möglichkeit, den Halteabschnitt 54 an der Unterseite eines Regalbodens anzubringen, wobei dann auf die Verbindungsstelle höhere Kräfte einwirken, die eine stärkere Befestigung erforderlich machen. Eine Anbringung an der Oberseite ist somit vorteilhafter für einfacheren und sichereren Halt der Regalbeleuchtungsvorrichtung 1 an dem Regalboden. Eine Befestigung an der Unterseite eines Regalbodens erleichtert die Befüllung des Regelbodens, da keine störende Kante des Halteabschnitts 54 auf der Oberseite des Regalbodens vorliegt.

Der sich abschnittsweise zwischen dem Leuchtmittelträger 3 und dem Etikettenhalter 5 erstreckende Lichtleitkörper 6 ist aus einem transparenten, lichtleitenden Kunststoffmaterial, vorzugsweise aus Polymethylmethacrylat (PMMA), hergestellt. Ein erster Abschnitt 60 des Lichtleitkörpers 6 ist eben ausgeführt und erstreckt sich zwischen dem ebenen Abschnitt des Leuchtmittelträgers 3 und dem ersten Flächenabschnitt 50 des Etikettenhalters 5, so dass sich diese parallel zueinander erstrecken. Ein unterer Abschnitt 61 des Lichtleitkörpers 6 ist rinnenartig gekrümmt ausgeführt und erstreckt sich abschnittsweise zwischen dem gekrümmten unteren Abschnitt 33 des Leuchtmittelträgers 3 und dem ebenfalls gekrümmten unteren Abschnitt 53 des Etikettenhalters 5. Die Krümmungen der unteren Abschnitte 33, 53, 61 des Leuchtmittelträgers 3, des Etikettenhalters 5 und des Lichtleitkörpers 6 sind so gewählt, dass bei der Montage der untere Abschnitt 33 des Leuchtmittelträgers 3 innen am unteren Abschnitt 61 des Lichtleitkörpers 6 zur Anlage gebracht werden kann und der untere Abschnitt 61 des Lichtleitkörpers 6 innen am unteren Abschnitt 53 des Etikettenhalters 5 zur Anlage gebracht werden kann. Um einen sicheren Halt des Leuchtmittelträgers 3 und des Lichtleitkörpers 6 an dem Etikettenhalter 5 zu bewirken, weist der Etikettenhalter 5 in diesem Ausführungsbeispiel eine Halteleiste 55 auf, die sich in Querrichtung parallel zum ersten Flächenabschnitt 50 erstreckt, so dass der Leuchtmittelträger 3 und der Lichtleitkörper 6 von der Seite eingeschoben werden können und zwischen der Halteleiste 55 und dem ersten Flächenabschnitt 50 festgelegt werden können, wobei die Halteleiste 55 einen oberen Rand des Leuchtmittelträgers 3 spielfrei übergreift.

Insbesondere aus Fig.2 wird deutlich, dass ein freies Ende 62 des unteren, rinnenartig gekrümmten Abschnitts 61 des Lichtleitkörpers 6 den Leuchtdioden 40 des Leuchtmittels 4 zugewandt ist und sich teilweise über die Lichtaustrittsflächen der Leuchtdioden 40 hinweg erstreckt. Dadurch wird erreicht, dass ein Teil des von den Leuchtdioden 40 während des Betriebs emittierten Lichts durch das freie Ende 62 des gekrümmten Abschnitts 61 des Lichtleitkörpers 6 in diesen eintreten kann und sich innerhalb des Lichtleitkörpers 6 ausbreiten kann. Das freie Ende 62 des gekrümmten Abschnitts 61 des Lichtleitkörpers 6 bildet somit einen Lichteintritt für zumindest einen Teil des von den Leuchtdioden 40 emittierten Lichts. Auf diese Weise ist es möglich, den Etikettenhalter 5 und das in dem Aufnahmebereich zwischen den beiden planparallelen Flächenabschnitten 50, 51 angeordnete Etikett beziehungsweise die dort angeordnete Regalbeschriftung zu hinterleuchten. Der übrige Teil des von den Leuchtdioden 40 emittierten Lichts ist dazu in der Lage, einen Regalabschnitt, insbesondere ein Regalfach, unterhalb desjenigen Regalbodens zu beleuchten, an dem die Regalbeleuchtungsvorrichtung 1 angebracht ist. Die Leuchtdioden 40 sind vorliegend so ausgebildet, dass sie Licht in einem Abstrahlwinkel in vertikaler Richtung von etwa 120° emittieren können. Vorzugsweise ist das freie Ende 62 des unteren Abschnitts 61 des Lichtleitkörpers 6 so angeordnet, dass etwa 20% des von den Leuchtdioden 40 des Leuchtmittels 4 emittierten Lichts in den Lichtleitkörper 6 eingekoppelt wird. Die übrigen etwa 80% des von den Leuchtdioden 40 emittierten Lichts können zumindest teilweise für die Beleuchtung des Regalfachs des Regals und der dort angeordneten Gegenstände genutzt werden.

Die dem Leuchtmittelträger 3 zugewandte Oberfläche 63 des Lichtleitkörpers 6 weist vorzugsweise eine Oberflächenbehandlung auf, um dadurch den Beleuchtungseffekt zu verbessern. So kann diese Oberfläche 63 zum Beispiel eine weiße Farbschicht oder eine Reflexionsschicht aufweisen. Es besteht auch die Möglichkeit, dass die Oberfläche 63 eine Laser-Gravur oder eine V-Schnitt-Gravur aufweist. Die Oberfläche 63 kann alternativ auch ein durch Drucken (insbesondere durch Siebdruck oder Tampondruck) erhältliches geometrisches Muster (zum Beispiel einen Punktrasterverlauf) aufweisen. Das aufgedruckte geometrische Muster kann mit oder ohne Verlauf vorliegen.

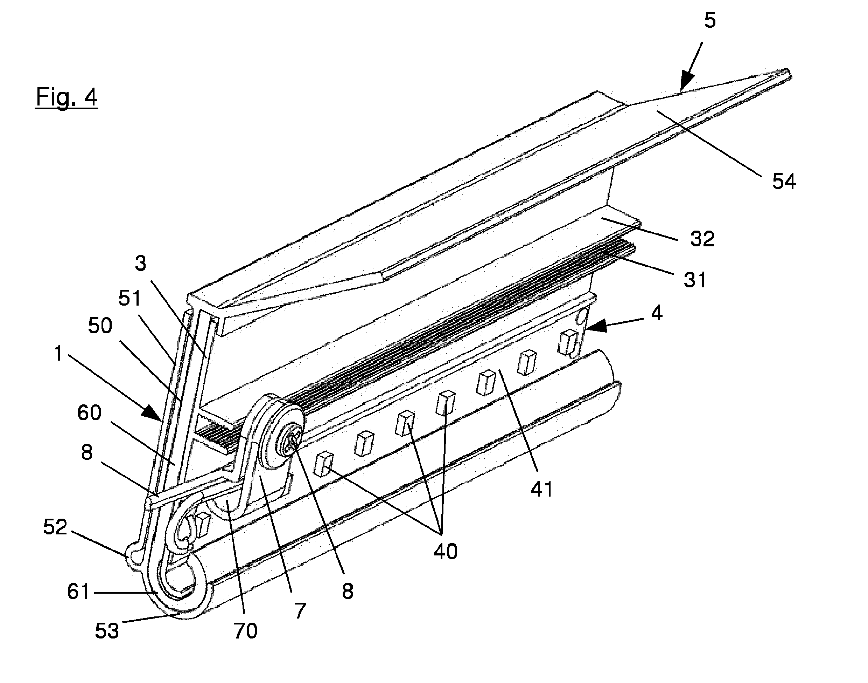

Wie in Fig. 4 zu erkennen, ist zwischen den beiden Profilschenkeln 31, 32 des Profilkanalabschnitts 30 ein Zugentlastungsmittel 7 angeordnet und mittels einer Befestigungsschraube 8 befestigt. Das Zugentlastungsmittel 7 weist eine Führungsöse 70 auf, durch die ein zweiadriges elektrisches Anschlusskabel 8 hindurchgeführt ist, dessen Adern an zwei korrespondierende elektrische Kontakte auf dem Leuchtmittelträger 41 angeschlossen sind. Das Zugentlastungsmittel 7 stellt in vorteilhafter Weise eine Zugentlastung für das elektrische Anschlusskabel 8 zur Verfügung und verhindert, dass sich die Adern des elektrischen Anschlusskabels 8 durch Zugkrafteinwirkung ungewollt von den elektrischen Kontakten lösen können.

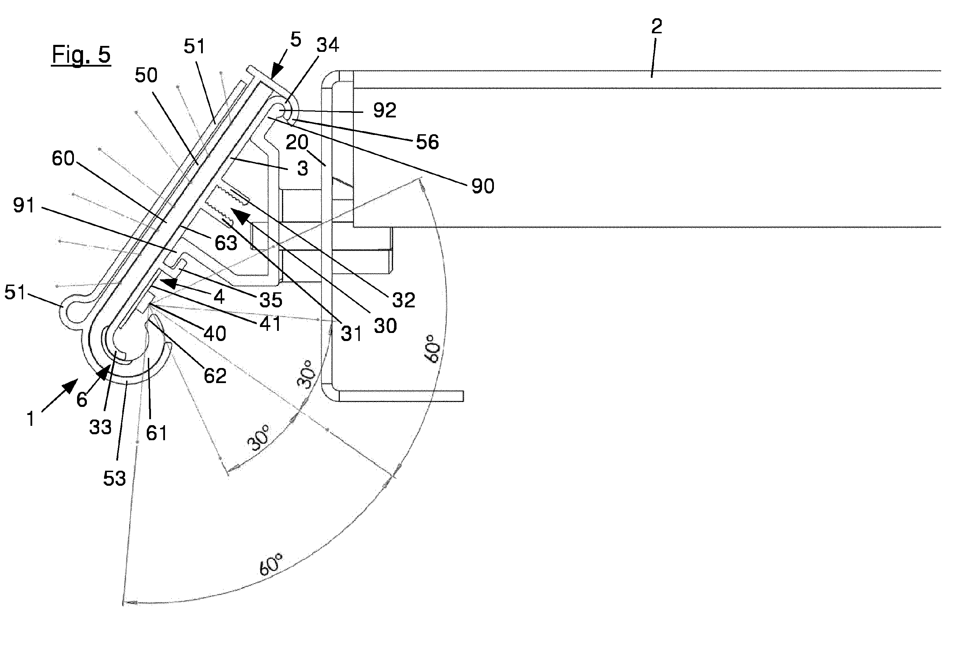

Unter Bezugnahme auf Fig. 5 soll nachfolgend ein zweites Ausführungsbeispiel einer Regalbeleuchtungsvorrichtung 1 näher erläutert werden. Die Regalbeleuchtungsvorrichtung 1 unterscheidet sich in erster Linie durch die konstruktive Ausgestaltung des Etikettenhalters 5 und des Leuchtmittelträgers 3 vom oben beschriebenen ersten Ausführungsbeispiel. Der Leuchtmittelträger 3 ist in diesem Ausführungsbeispiel ebenfalls aus einem wärmeleitenden Werkstoff, insbesondere aus Aluminium oder aus einem anderen metallischen Werkstoff, hergestellt und abschnittsweise eben ausgeführt. Das im unteren Bereich des ebenen Abschnitts des Leuchtmittelträgers 3 angeordnete Leuchtmittel 4 ist streifenförmig ausgebildet und weist eine Mehrzahl auf einem Trägerstreifen 41 angeordneter Leuchtdioden 40 auf, die in Querrichtung der Regalbeleuchtungsvorrichtung 1 mit Abstand zueinander (vorzugsweise äquidistant) nebeneinander angeordnet sind. Der Leuchtmittelträger 3 umfasst ferner einen Profilkanalabschnitt 30 mit zwei Profilschenkeln 31, 32, die sich parallel zueinander in Querrichtung der Regalbeleuchtungsvorrichtung 1 erstrecken und zur Aufnahme des hier nicht explizit dargestellten Zugentlastungsmittels geeignet sind. Zu diesem Zweck ist es ebenfalls vorteilhaft, dass der Leuchtmittelträger 3 aus einem metallischen Werkstoff hergestellt ist. Der untere Abschnitt 33 des Leuchtmittelträgers 3 ist wiederum rinnenartig gekrümmt ausgebildet. Ein oberer Abschnitt 34 des Leuchtmittelträgers 3 ist ebenfalls rinnenartig gekrümmt ausgebildet.

Der Etikettenhalter 5, der zur Aufnahme mindestens eines Etiketts, einer Regalbeschriftung oder dergleichen geeignet ist, ist einstückig aus einem transparenten Kunststoff, insbesondere aus Polyvinylchlorid (PVC), Polycarbonat (PC) oder aus Polymethylmethacrylat (PMMA), hergestellt und weist einen ersten Flächenabschnitt 50 und einen zweiten Flächenabschnitt 51 auf. Die beiden Flächenabschnitte 50, 51 sind planparallel und über einen gebogen ausgeführten Federabschnitt 52 miteinander verbunden. Zwischen den beiden planparallelen Flächenabschnitten 50, 51 ist ein Aufnahmebereich (nicht mit Bezugszeichen versehen) ausgebildet, in dem mindestens ein Etikett, insbesondere ein Waren- und/oder Preisetikett, oder eine Regalbeschriftung angeordnet werden kann. Ein unterer Abschnitt 53 des Etikettenhalters 5 ist rinnenartig gekrümmt ausgebildet. Ein freies Ende 56 eines oberen Bereichs des Etikettenhalters 5 ist ebenfalls abschnittsweise gekrümmt ausgebildet.

Der Lichtleitkörper 6, der sich abschnittsweise zwischen dem Leuchtmittelträger 3 und dem Etikettenhalter 5 erstreckt, ist vorzugsweise aus einem transparenten, lichtleitenden Kunststoffmaterial, insbesondere aus Polymethylmethacrylat (PMMA), hergestellt und weist einen ebenen Abschnitt 60 auf, der sich zwischen dem ebenen Abschnitt des Leuchtmittelträgers 3 und dem ersten Flächenabschnitt 50 des Etikettenhalters 5 erstreckt, so dass sich diese parallel zueinander erstrecken. Ein unterer Abschnitt 61 des Lichtleitkörpers 6 ist rinnenartig gekrümmt ausgeführt und erstreckt sich abschnittsweise zwischen dem gekrümmten unteren Abschnitt 33 des Leuchtmittelträgers 3 und dem ebenfalls gekrümmten unteren Abschnitt 53 des Etikettenhalters 5. Die Krümmungen der unteren Abschnitte 33, 53, 61 des Leuchtmittelträgers 3, des Etikettenhalters 5 und des Lichtleitkörpers 6 sind so gewählt, dass bei der Montage der untere Abschnitt 33 des Leuchtmittelträgers 3 innen am unteren Abschnitt 61 des Lichtleitkörpers 6 zur Anlage gebracht werden kann und der untere Abschnitt 61 des Lichtleitkörpers 6 innen am unteren Abschnitt 53 des Etikettenhalters 5 zur Anlage gebracht werden kann. Das gekrümmte freie Ende 56 des oberen Abschnitts des Etikettenhalters 5 erstreckt sich nach der Montage über den oberen gekrümmten Abschnitt 34 des Leuchtmittelträgers 3 hinweg und übergreift diesen für einen sicheren Halt des Leuchtmittelträgers 3 und des zwischen diesem und dem Etikettenhalter 5 angeordneten Lichtleitkörpers 6.

Für die Anbringung der Regalbeleuchtungsvorrichtung 1 an einem Regalboden 2 weist diese eine Befestigungsklammer 9 auf, die so ausgebildet ist, dass sie an einer vorderen Stirnseite 20 des Regalbodens 2 anbringbar ist. Vorzugsweise ist die Befestigungsklammer 9 aus Polycarbonat (PC) hergestellt. Die Befestigungsklammer 9 weist einen ersten Profilabschnitt 90 und einen zweiten Profilabschnitt 91 auf, die sich in Querrichtung der Regalbeleuchtungsvorrichtung 1 parallel zum ebenen Abschnitt des Leuchtmittelträgers 3 erstrecken. Der erste Profilabschnitt 90 weist an seinem freien Ende eine Verdickung 92 auf, die bei der Montage von unten in den oberen gekrümmten Abschnitt 34 des Leuchtmittelträgers 3 eingreift. Die Leuchtmittelhalterung 3 weist ferner einen sich zumindest abschnittsweise in Querrichtung erstreckenden Halteabschnitt 35 auf, der so geformt ist, dass er das freie Ende des zweiten Profilschenkels 91 abschnittsweise übergreifen kann.

In Fig. 5 ist weiterhin zu erkennen, dass ein freies Ende 62 des unteren, gekrümmten Abschnitts 61 des Lichtleitkörpers 6 den Leuchtdioden 40 des Leuchtmittels 4 zugewandt ist und sich teilweise über die Lichtaustrittsflächen der Leuchtdioden 40 hinweg erstreckt. Dadurch wird erreicht, dass ein Teil des von den Leuchtdioden 40 während des Betriebs emittierten Lichts durch das freie Ende 62 des gekrümmten Abschnitts 61 des Lichtleitkörpers 6 in diesen eintreten kann und sich innerhalb des Lichtleitkörpers 6 ausbreiten kann. Auf diese Weise ist es möglich, den Etikettenhalter 5 und das in dem Aufnahmebereich zwischen den beiden planparallelen Flächenabschnitten 50, 51 angeordnete Etikett beziehungsweise die dort angeordnete Regalbeschriftung zu hinterleuchten. Der übrige Teil des von den Leuchtdioden 40 emittierten Lichts ist dazu in der Lage, einen Regalabschnitt, insbesondere ein Regalfach, unterhalb desjenigen Regalbodens zu beleuchten, an dem die Regalbeleuchtungsvorrichtung 1 angebracht ist. Die Leuchtdioden 40 sind vorliegend so ausgebildet, dass sie Licht in einem Abstrahlwinkel in vertikaler Richtung von etwa 120° emittieren können. Vorzugsweise ist das freie Ende 62 des unteren Abschnitts 61 des Lichtleitkörpers 6 so angeordnet, dass etwa 20% des von den Leuchtdioden 40 des Leuchtmittels 4 emittierten Lichts in den Lichtleitkörper 6 eingekoppelt wird. Die übrigen etwa 80% des von den Leuchtdioden 40 emittierten Lichts können zumindest teilweise für die Beleuchtung des Regalfachs des Regals und der dort angeordneten Gegenstände genutzt werden.

Die dem Leuchtmittelträger 3 zugewandte Oberfläche 63 des Lichtleitkörpers 6 weist auch in diesem Ausführungsbeispiel vorzugsweise eine Oberflächenbehandlung auf, um dadurch den Beleuchtungseffekt zu verbessern. So kann diese Oberfläche 63 zum Beispiel eine weiße Oberflächenfarbschicht oder eine Reflexionsschicht aufweisen. Es besteht auch die Möglichkeit, dass diese Oberfläche 63 eine Laser-Gravur oder eine V-Schnitt-Gravur aufweist. Die Oberfläche 63 kann alternativ auch ein durch Drucken (insbesondere durch Siebdruck oder Tampondruck) erhältliches geometrisches Muster (zum Beispiel einen Punktrasterverlauf) aufweisen. Das aufgedruckte geometrische Muster kann mit oder ohne Verlauf vorliegen.

## Patentansprüche

1. Regalbeleuchtungsvorrichtung (1) zur Beleuchtung eines Regalfachs eines Regals, umfassend
- Mittel zur Anbringung der Regalbeleuchtungsvorrichtung (1) an einem Teil, insbesondere an einem Regalboden (2), des Regals,
- einen Leuchtmittelträger (3),
- ein Leuchtmittel (4) mit einer Anzahl von Lichtquellen, das derart an dem Leuchtmittelträger (3) angebracht ist, dass es während des Betriebs zumindest eines der Regalfächer des Regals beleuchten kann, sowie
- einen zumindest teilweise transparenten Etikettenhalter (5), der zur Aufnahme mindestens eines Etiketts, einer Regalbeschriftung oder dergleichen geeignet ist,
wobei die Regalbeleuchtungsvorrichtung (1) mindestens einen Lichtleitkörper (6) aufweist, der sich zumindest abschnittsweise zwischen dem Leuchtmittelträger (3) und dem Etikettenhalter (5) erstreckt und so ausgebildet und angeordnet ist, dass ein Teil des von jeder der Lichtquellen des Leuchtmittels (4) während des Betriebs emittierten Lichts in den Lichtleitkörper (6) eingekoppelt werden kann und sich in diesem derart ausbreiten kann, dass es den Etikettenhalter (5) zumindest abschnittsweise hinterleuchten kann, und der übrige Teil des von jeder der Lichtquellen des Leuchtmittels (4) emittierten Lichts das Regalfach beleuchten kann, **dadurch gekennzeichnet, dass** der Lichtleitkörper (6) einen unteren Abschnitt (61) aufweist, der abschnittsweise gekrümmt ausgeführt und so angeordnet ist, dass sich ein freies Ende (62) des unteren Abschnitts teilweise über die Lichtaustrittsflächen der Lichtquellen hinweg erstreckt.

2. Regalbeleuchtungsvorrichtung (1) nach Anspruch 1, **dadurch gekennzeichnet, dass** der Etikettenhalter (5) einen ersten Flächenabschnitt (50) und einen zweiten Flächenabschnitt (51) aufweist, die planparallel sind, wobei zwischen den Flächenabschnitten (50, 51) ein Aufnahmebereich ausgebildet ist, der zur Aufnahme mindestens eines Etiketts, einer Regalbeschriftung oder dergleichen geeignet ist.

3. Regalbeleuchtungsvorrichtung (1) nach Anspruch 2, **dadurch gekennzeichnet, dass** die beiden Flächenabschnitte (50, 51) einstückig über einen abschnittsweise gebogen ausführten Federabschnitt (52) miteinander verbunden sind.

4. Regalbeleuchtungsvorrichtung (1) nach einem der Ansprüche 1 bis 3, **dadurch gekennzeichnet, dass** der Etikettenhalter (5) aus einem transparenten Kunststoff, insbesondere aus Polyvinylchlorid, Polycarbonat oder aus Polymethylmethacrylat, hergestellt ist.

5. Regalbeleuchtungsvorrichtung (1) nach einem der Ansprüche 1 bis 4, **dadurch gekennzeichnet, dass** die Mittel zur Anbringung der Regalbeleuchtungsvorrichtung (1) an einem Teil des Regals einen ebenen Halteabschnitt (54) umfassen, der so ausgebildet ist, dass er insbesondere an einer Oberseite oder Unterseite eines Regalbodens zur Anlage gebracht werden kann und an diesem, insbesondere mit einem Klebemittel, befestigbar ist.

6. Regalbeleuchtungsvorrichtung (1) nach einem der Ansprüche 1 bis 4, **dadurch gekennzeichnet, dass** die Mittel zur Anbringung der Regalbeleuchtungsvorrichtung (1) an einem Teil des Regals eine Befestigungsklammer (9) umfassen, die so ausgebildet ist, dass sie an dem Regalboden (2), insbesondere an einer vorderen Stirnseite (20) des Regalbodens (2) anbringbar ist.

7. Regalbeleuchtungsvorrichtung (1) nach einem der Ansprüche 1 bis 6, **dadurch gekennzeichnet, dass** der Lichtleitkörper (6) aus transparentem Polymethylmethacrylat hergestellt ist.

8. Regalbeleuchtungsvorrichtung (1) nach einem der Ansprüche 1 bis 7, **dadurch gekennzeichnet, dass** eine dem Leuchtmittelträger (3) zugewandte Oberfläche (63) des Lichtleitkörpers (6) eine Oberflächenbehandlung, insbesondere eine weiße Farbschicht, eine Reflexionsschicht, ein aufgedrucktes geometrisches Muster, eine Laser-Gravur oder eine V-Schnitt-Gravur, aufweist.

9. Regalbeleuchtungsvorrichtung (1) nach einem der Ansprüche 1 bis 8, **dadurch gekennzeichnet, dass** ein unterer Abschnitt (33) des Leuchtmittelträgers (3) und ein unterer Abschnitt (53) des Etikettenhalters (5) gekrümmt ausgebildet sind, wobei die Krümmungen der unteren Abschnitte (33, 53, 61) des Leuchtmittelträgers (3), des Etikettenhalters (5) und des Lichtleitkörpers (6) so gewählt sind, dass bei der Montage der untere Abschnitt (33) des Leuchtmittelträgers (3) innen am unteren Abschnitt (61) des Lichtleitkörpers (6) zur Anlage gebracht werden kann und der untere Abschnitt (61) des Lichtleitkörpers (6) innen am unteren Abschnitt (53) des Etikettenhalters (5) zur Anlage gebracht werden kann.

10. Regalbeleuchtungsvorrichtung (1) nach einem der Ansprüche 1 bis 9, **dadurch gekennzeichnet, dass** die Lichtquellen Leuchtdioden (40) sind, die vorzugsweise mit Abstand zueinander auf einem Trägerstreifen (41) angeordnet sind.

## Claims

1. Shelf lighting device (1) for lighting a shelf space of a shelf, comprising
- means for fitting the shelf lighting device (1) to a part, in particular to a shelf support (2), of the shelf,
- a lighting means carrier (3),
- a lighting means (4) having a number of light sources, which is fitted to the lighting means carrier (3) in such a way that, during operation, it is able to illuminate at least one of the shelf spaces of the shelf, and
- an at least partly transparent label holder (5), which is suitable to hold at least one label, a shelf inscription or the like,
the shelf lighting device (1) having at least one light guide element (6), which extends between the lighting means carrier (3) and the label holder (5), at least in some sections, and is formed and arranged in such a way that part of the light emitted by each of the light sources of the lighting means (4) during operation can be coupled into the light guide element (6) and can propagate in the latter such that it is able to backlight the label holder (5), at least in some sections, and the remaining part of the light emitted by each of the light sources of the lighting means (4) is able to illuminate the shelf space, **characterized in that** the light guide element (6) comprises a lower section (61), which is designed to be curved in some sections and is arranged such that a free end (62) of the lower section extends to some extent beyond the light outlet surfaces of the light sources.

2. Shelf lighting device (1) according to Claim 1, **characterized in that** the label holder (5) comprises a first flat section (50) and a second flat section (51), which are plane-parallel, wherein a holding area, which is suitable to hold at least one label, a shelf inscription or the like, is formed between the flat sections (50, 51).

3. Shelf lighting device (1) according to Claim 2, **characterized in that** the two flat sections (50, 51) are connected to each other in one piece via a spring section (52) which is designed to be curved in some sections.

4. Shelf lighting device (1) according to one of Claims 1 to 3, **characterized in that** the label holder (5) is produced from a transparent plastic, in particular from polyvinyl chloride, polycarbonate or from polymethylmethacrylate.

5. Shelf lighting device (1) according to one of Claims 1 to 4, **characterized in that** the means for fitting the shelf lighting device (1) to a part of the shelf comprise a plane holding section (54), which is designed in such a way that it can be brought into contact in particular with an upper side or underside of a shelf support and can be fixed to the latter, in particular by using an adhesive.

6. Shelf lighting device (1) according to one of Claims 1 to 4, **characterized in that** the means for fitting the shelf lighting device (1) to a part of the shelf comprise a fixing clamp (9), which is designed in such a way that it can be fitted to the shelf support (2), in particular to a front side (20) of the shelf support (2).

7. Shelf lighting device (1) according to one of Claims 1 to 6, **characterized in that** the light guide element (6) is produced from transparent polymethylmethacrylate.

8. Shelf lighting device (1) according to one of Claims 1 to 7, **characterized in that** a surface (63) of the light guide element (6) that faces the lighting means carrier (3) has a surface treatment, in particular a white coloured layer, a reflective layer, a geometric pattern printed on, a laser engraving or a V-section engraving.

9. Shelf lighting device (1) according to one of Claims 1 to 8, **characterized in that** a lower section (33) of the lighting means carrier (3) and a lower section (53) of the label holder (5) are designed to be curved, wherein the curvatures of the lower sections (33, 53, 61) of the lighting means carrier (3), of the label holder (5) and of the light guide element (6) are chosen such that, during assembly, the lower section (33) of the lighting means carrier (3) can be brought into contact with the inside of the lower section (61) of the light guide element (6), and the lower section (61) of the light guide element (6) can be brought into contact with the inside of the lower section (53) of the label holder (5).

10. Shelf lighting device (1) according to one of Claims 1 to 9, **characterized in that** the light sources are light-emitting diodes (40), which are preferably arranged at a distance from one another on a carrier strip (41).

## Revendications

1. Dispositif d'éclairage d'étagère (1) pour éclairer un compartiment d'étagère d'une étagère, comprenant
- des moyens pour monter le dispositif d'éclairage d'étagère (1) sur une partie, en particulier sur un fond d'étagère (2), de l'étagère,
- un support de moyen d'éclairage (3),
- un moyen d'éclairage (4) avec un nombre de sources lumineuses, qui est monté sur le support de moyen d'éclairage (3) de telle manière qu'il peut éclairer, pendant la mise en oeuvre, au moins un des compartiments d'étagère de l'étagère, ainsi
- qu'au moins un support d'étiquette (5) en partie transparent, qui est apte à recevoir au moins une étiquette, une inscription d'étagère ou élément analogue,
le dispositif d'éclairage d'étagère (1) comportant au moins un corps de guidage de lumière (6), qui s'étend au moins par section entre le support de moyen d'éclairage (3) et le support d'étiquette (5) et est constitué de telle manière qu'une partie de la lumière émise pendant la mise en oeuvre par chacune des sources de lumière du moyen d'éclairage (4), peut être injectée dans le corps de guidage de lumière (6) et peut s'étaler dans celui-ci de telle manière qu'elle peut rétroéclairer au moins par section le support d'étiquette (5) et l'autre partie de la lumière émise par chacune des sources de lumière du moyen d'éclairage (4) peut éclairer le compartiment d'étagère, **caractérisé en ce que** le corps de guidage de lumière (6) comporte une section inférieure (61), qui est réalisée courbée par section et est disposée de telle manière qu'une extrémité libre (62) de la section inférieure s'étend en partie au-delà des surfaces de sortie de la lumière des sources de lumière.

2. Dispositif d'éclairage d'étagère (1) selon la revendication 1, **caractérisé en ce que** le support d'étiquette (5) comporte une première section de surface (50) et une deuxième section de surface (51), une zone de réception étant constituée entre les sections de surface (50, 51), qui est apte à recevoir au moins une étiquette, une inscription d'étagère ou élément analogue.

3. Dispositif d'éclairage d'étagère (1) selon la revendication 2, **caractérisé en ce que** les deux sections de surfaces (50, 51) sont reliées l'une à l'autre en une seule pièce sur une section à ressort (52) exécutée en partie pliée.

4. Dispositif d'éclairage d'étagère (1) selon l'une quelconque des revendications 1 à 3, **caractérisé en ce que** le support d'étiquette (5) est fabriqué dans une matière plastique transparente, en particulier en polychlorure de vinyle, en polycarbonate ou en polyméthylméthacrylate.

5. Dispositif d'éclairage d'étagère (1) selon l'une quelconque des revendications 1 à 4, **caractérisé en ce que** les moyens pour monter le dispositif d'éclairage d'étagère (1) sur une partie de l'étagère comprennent une section de fixation plane (54) qui est constituée de telle manière qu'elle peut être mise en appui en particulier sur une face supérieure ou une face inférieure d'un fond d'étagère et être fixée à celui-ci, en particulier avec un moyen adhésif.

6. Dispositif d'éclairage d'étagère (1) selon l'une quelconque des revendications 1 à 4, **caractérisé en ce que** les moyens pour monter le dispositif d'éclairage d'étagère (1) sur une partie de l'étagère comprennent une bride de fixation (9), qui est constituée de telle manière qu'elle peut être montée sur le fond de l'étagère (2), en particulier sur une face avant (20) du fond d'étagère (2) .

7. Dispositif d'éclairage d'étagère (1) selon l'une quelconque des revendications 1 à 6, **caractérisé en ce que** le corps de guidage de lumière (6) est fabriqué en polyméthylméthacrylate transparent.

8. Dispositif d'éclairage d'étagère (1) selon l'une quelconque des revendications 1 à 7, **caractérisé en ce qu'**une surface (63) du corps de guidage de lumière (6), tournée vers le support de moyen d'éclairage (3), comporte un traitement de surface, en particulier une couche de peinture blanche, une couche réflectrice, un motif géométrique imprimé, une gravure au laser ou une gravure à découpe en V.

9. Dispositif d'éclairage d'étagère (1) selon l'une quelconque des revendications 1 à 8, **caractérisé en ce qu'**une section inférieure (33) du support de moyen d'éclairage (3) et une section inférieure (53) du support d'étiquette (5) sont constituées courbées, les courbures des sections inférieures (33, 53, 61) du support de moyen d'éclairage (3), du support d'étiquette (5) et du corps de guidage de lumière (6) sont choisies de telle manière que lors du montage, la section inférieure (33) du support de moyen d'éclairage (3) peut être mise en appui intérieurement sur la section inférieure (61) du corps de guidage de lumière (6) et la section inférieure (61) du corps de guidage de lumière (6) peut être mise en appui intérieurement sur la section inférieure (53) du support d'étiquette (5).

10. Dispositif d'éclairage d'étagère (1) selon l'une quelconque des revendications 1 à 9, **caractérisé en ce que** les sources de lumière sont des diodes électroluminescentes (40), qui sont disposées de préférence à une distance l'une de l'autre sur une bande de support (41).
